# NEUE EUROPÄISCHE PATENTSCHRIFT

(11) **EP 3 230 704 B2**
(45) Veröffentlichungstag und Bekanntmachung des Hinweises auf die Entscheidung über den Einspruch: **22.02.2023**
(45) Hinweis auf die Patenterteilung: 03.04.2019
(21) Anmeldenummer: 15793732.7
(22) Anmeldetag: 03.11.2015
(51) Int. Cl.: G01K 1/14, G01K 1/18, G01K 1/143

(54) **TEMPERATURFÜHLER**
TEMPERATURE SENSOR
SONDE DE TEMPERATURE

(30) Priorität: 09.12.2014 DE 102014118206
(43) Veröffentlichungstag der Anmeldung: 18.10.2017
(73) Patentinhaber: Endress+Hauser Wetzer GmbH+Co. KG, 87484 Nesselwang (DE)
(72) Erfinder: WOLF, Georg, 87616 Marktoberdorf (DE); WIEDEMANN, Stephan, 87544 Bihlerdorf (DE); UMKEHRER, Alfred, 87659 Hopferau (DE)
(74) Vertreter: Andres, Angelika Maria
(86) Internationale Anmeldenummer: PCT/EP2015/075526
(87) Internationale Veröffentlichungsnummer: WO 2016/091476

(56) Entgegenhaltungen:
- EP-B1- 0 062 936
- DE-A1- 2 912 930
- DE-A1- 3 047 696
- DE-A1- 3 346 565
- DE-A1-102006 003 602
- DE-B3-102005 016 896
- DE-B3-102005 040 699
- DE-B3-102005 040 699
- DE-U1- 8 317 879
- DE-U1-202015 103 789
- "Basic design theory" In: Michael L. Berins: "Plastics Engineering Handbook of the Society of the Plastics Industry", 1991, Van Nostrand Reinhold, New York ISBN: 978-1-4615-7606-8 pages 318, 338, 745-746,
- K.H. Grote et al: "DUBBEL Taschenbuch für den Maschinenbau", 2005, Springer, Berlin Heidelberg New York , (als E12 bezeichnet) ISBN: 3-540-22142-5 pages E88-E89,

## Beschreibung

Die Erfindung bezieht sich auf einen Temperaturfühler, vorzugsweise einen Oberflächentemperaturfühler.

Eine Sensoranordnung zur Temperaturmessung einer Oberfläche ist bspw. aus der Patentschrift DE 102005016896 B3 bekannt geworden. Dabei ist eine wärmeleitende Kappe oder eine wärmeleitfähige Folie zur Kontaktierung der Oberfläche vorgesehen. Eine weitere Ausgestaltung für einen Oberflächentemperaturfühler ist in der Patentanmeldung DE2912930A1 beschrieben.

Ferner ist aus dem Gebrauchsmuster DE 9209556 U1 ein Temperaturfühler für Oberflächentemperaturmessungen bekannt geworden, bei dem der Sensor mit einer Kontaktscheibe verbunden ist, auf welcher Kontaktscheibe ein schlecht wärmeleitendes Verbindungsteil sitzt.

DE102006003602 offenbart einen Oberflächentemperatursensor.

Ausgehend davon ist es Aufgabe der vorliegenden Erfindung einen einfacheren Aufbau eines Temperaturfühlers vorzuschlagen.

Die Aufgabe wird durch einen Temperaturfühler gemäß Anspruch 1 gelöst.

Der Hohlkörper kann bspw. zylinderförmig sein und einen zumindest abschnittsweise vorzugsweise vollständig gleichbleibenden Außendurchmesser und/oder Innendurchmesser aufweisen. Der Außendurchmesser kann dabei bspw. zwischen 0,4cm und 0,8cm betragen.

Bei dem Hohlkörper handelt es sich bevorzugt um ein Rohr, das aus einem metallischen und/oder starren Material besteht. Das Rohr dient dabei zur Anordnung des Fühlers in einer gewünschten Position und zur Aufnahme des Formteils etc.

Das Formteil besteht dabei besonders bevorzugt aus einem Material dessen Wärmeleitfähigkeit geringer ist als diejenige des Materials aus dem das Koppelelement und/oder der Hohlkörper besteht. Das Formteil ist dabei an einem Ende des Hohlkörpers angeordnet und dient dazu den Hohlkörper thermisch von dem Behälter, an dem der Temperaturfühler angelegt ist, und/oder dem Koppelelement thermisch zu isolieren.

Das Formteil dient dabei bspw. als Abstandshalter, der einen Abstand zwischen dem Koppelelement und dem Hohlkörper herstellt. Das Formteil kann dabei bspw. einen ringförmigen Abschnitt aufweisen, an dem die Endfläche des Hohlkörpers als auch die Endfläche des Koppelelements anliegen. Vorzugsweise sind die Endfläche des Hohlkörpers und des Koppelelements gegen diesen ringförmigen Abschnitt gepresst. Vorzugsweise ist dieser Abschnitt des Formteils fluchtend zu dem Hohlkörper und/oder dem Koppelelement angeordnet.

Der Temperaturfühler dient dabei bevorzugt zur Erfassung einer Oberflächentemperatur, bspw. der Oberflächentemperatur eines Behälters in dem sich ein Messstoff befindet. Der Behälter kann dabei eine gewölbte Oberfläche aufweisen. Insbesondere kann es sich bei dem Behälter um ein Rohr, eine Rohrleitung oder einen Tank handeln.

Das Koppelelement dient dazu die Wärme an der Oberfläche des Behälters, dem Messelement zuzuführen. Dabei kann das Koppelelement bspw. aus dem gleichen Material bestehen wie der Hohlkörper. Das Koppelelement besteht bspw. aus Kupfer, Silber oder Stahl. Vorzugsweise weist das Koppelelement eine Wärmeleitfähigkeit zwischen 20 W/mK und 1200 W/mK auf. Das Formteil weist hingegen bevorzugt eine Wärmeleitfähigkeit zwischen 0,02 W/mK und 20 W/mK auf.

Bei dem Messelement kann es sich bspw. um einen temperaturabhängigen Widerstand oder um ein Thermoelement handeln. Das Messelement kann wie bereits erwähnt mit dem Koppelelement verbunden, bspw. angelötet, sein.

Erfindungsgemäß ist das Formteil über einen Presssitz mit dem Hohlkörper verbunden.

In einer Ausführungsform des Formteils als Verbindungselement zwischen Koppelelement und Hohlkörper bzw. Trägerrohr dient. Über das Formteil kann das Koppelelement mit dem Hohlkörper verbunden werden. Bspw. kann wenigstens ein Verbindungsmittel an dem Hohlkörper vorgesehen sein das mit wenigstens einem Verbindungsmitteln des Formteils zusammenwirkt, um das Formteil an dem Hohlkörper zu befestigen. Das Formteil kann zudem wenigstens ein weiteres Verbindungsmittel aufweisen, um das Koppelelement an dem Formteil zu befestigen.

In der Erfindung ist das Koppelelement an der Stirnseite des Temperaturfühlers angeordnet ist. Dadurch kann der Temperaturfühler mit seiner Stirnseite an einen Behälter angelegt werden, dessen Oberflächentemperatur bestimmt werden soll bzw. in Welchem Behälter sich ein Messstoff befindet, dessen Temperatur bestimmt werden soll.

In der Erfindung ist das Koppelelement eine Kappe, die an einem Ende des Temperaturfühlers angeordnet ist und den Hohlkörper verschließt.

In der Erfindung ist ein Messelement innerhalb des Lumens der Kappe angeordnet. Bspw. kann das Messelement an der der Kappe angelötet sein. Die Kappe kann bspw. einen Boden und Seitenwände aufweisen und das Messelement an dem Boden angelötet sein. Das Lumen wird dabei von der von dem Boden der Kappe abstehenden Seitenwand umschlossen.

In einer weiteren Ausführungsform des Temperaturfühlers dient das Koppelement dazu, thermisch mit der Umgebung des Temperaturfühlers an der Stirnseite des Temperaturfühlers zu koppeln.

In einer weiteren Ausführungsform des Temperaturfühlers ist das Koppelelement über das Formteil mit dem Hohlkörper verbunden.

In einer weiteren Ausführungsform des Temperaturfühlers ist das Koppelelement an dem Formteil befestigt, wobei das Formteil wiederum an dem Hohlkörper befestigt ist.

In einer weiteren Ausführungsform des Temperaturfühlers besteht das Formteil aus einem elastischen Material, insbesondere einem hitzebeständigen, elastischen Material, vorzugsweise einem synthetischen Material, wie bspw. Kunststoff oder Silikon.

In einer weiteren Ausführungsform des Temperaturfühlers weist das Formteil einen ersten Abschnitt auf, welcher erste Abschnitt in das Lumen des Hohlkörpers ragt. Dieser Abschnitt kann einen Durchmesser aufweisen, der im Wesentlichen dem Innendurchmesser des Hohlkörpers entspricht.

In einer weiteren Ausführungsform des Temperaturfühlers weist der erste Abschnitt Rippen auf, die entlang der Längsachse des Hohlkörpers verlaufen.

In einer weiteren Ausführungsform des Temperaturfühlers weist das Formteil einen zweiten Abschnitt auf, welcher zweite Abschnitt in das Lumen der Kappe ragt. Dieser Abschnitt kann einen Durchmesser aufweisen, der im Wesentlichen dem Innendurchmesser des Koppelelements, bspw. der Kappe, entspricht.

In einer weiteren Ausführungsform des Temperaturfühlers weist der zweite Abschnitt Rippen auf, die entlang der Längsachse des Hohlkörpers verlaufen.

Durch den ersten bzw. den zweiten Abschnitt kann somit ein Presssitz und somit eine Verbindung bzw. Befestigung des Formteils an dem Hohlkörper bzw. dem Koppelelement hergestellt werden.

In einer weiteren Ausführungsform des Temperaturfühlers weist das Formteil einen dritten Abschnitt auf, der vorzugsweise zwischen dem ersten und dem zweiten Abschnitt liegt, welcher dritte Abschnitt an die Oberfläche des Hohlkörpers und der Kappe, vorzugsweise fluchtend, anschließt. Dabei kann es sich um den oben erwähnten ringförmigen Abschnitt handeln.

In einer weiteren Ausführungsform des Temperaturfühlers weist das Formteil eine durchgehende Öffnung auf, durch die hindurch das Messelement elektrisch, bspw. über Anschlussleitungen, verbunden ist.

Der restliche Hohlraum in dem Koppelelement und dem Formteil kann bspw. mit einer, insbesondere dauerelastischen, Vergussmasse, wie bspw. SIL-Gel oder 2K-Silikon, aufgefüllt bzw. vergossen werden. Dadurch kann das Messelement gegen eindringende Feuchtigkeit geschützt werden.

In einer weiteren Ausführungsform des Temperaturfühlers sind in dem Hohlkörper Anschlussleitungen angeordnet, die zum elektrischen kontaktieren des Messelements dienen. Bei den Anschlussleitungen kann es sich bspw. um einen oder mehrere Drähte oder Kabel handeln, die mit dem Messelement verbunden sind. Über diese Anschlussleitungen kann ein vermittels des Messelements erzeugtes Messsignal an eine Auswerteeinheit, die bspw. eine Messsignal- bzw. Messwertverarbeitung umfasst, übertragen werden.

In einer weiteren Ausführungsform des Temperaturfühlers ist der Temperaturfühler, vorzugsweise vermittels einer Vorspannkraft, mit seiner Stirnseite an eine Oberfläche eines Behälters, bspw. einer Rohrleitung, angelegt.

Besteht das Formteil aus einem flexiblen Material kann das Koppelelement, durch Aufbringen einer geeigneten Vorspannung an die Form der Oberfläche, deren Temperatur gemessen werden soll, angepasst werden. Andererseits kann auch gem. der Ausführungsform mit einem starren Formteil, das als Verbindungselement zw. einer Kappe, in der eine Messelement angeordnet ist, und einem Trägerrohr vorgesehen sein, diese Kappe vermittels einer Vorspannkraft auf einer Oberfläche zu positionieren und gegen diese Oberfläche zu drücken. Dafür ist eine besonders steife bzw. starre Verbindung zwischen dem Trägerrohr und der kappe vorteilhaft.

Vorliegend soll also gem. einer Ausführungsform ein nicht flexibles bzw. starres Formteil als Verbindungselement verwendet werden. Dieses kann bspw. aus hochtemperaturfestem Kunststoff z.B. PEEK bestehen. Bspw. das Formteil ein Elastizitätsmodul von größer als 1000 MPa, insbesondere im Fall von PEEK von 3600 MPa, auf.

Die Erfindung wird anhand der nachfolgenden Zeichnungen näher erläutert. Es zeigt:
Fig. 1: einen Querschnitt durch einen Temperaturfühler, und
Fig. 2: eine Explosionsdarstellung des Temperaturfühlers gem. Figur 1.

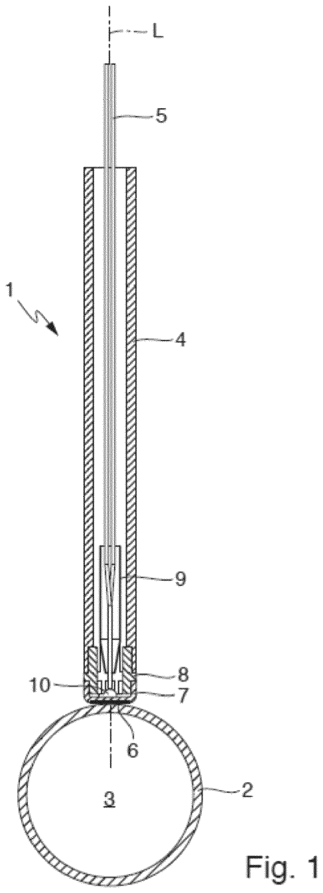

Figur 1 zeigt eine erste Ausführungsform der vorgeschlagenen Erfindung. Dabei ist ein Messelement 10 in Form eines temperaturabhängigen Widerstands, bspw. eines PT100 Temperatursensor, vorgesehen. Das Messelement 10 ist in ein dünnwandiges, nur wenige zehntel Millimeter starkes, Kappe 7, die als Koppelelement dient, angelötet. Die Kappe 7 kann bspw. aus Kupfer bestehen. Alternativ können auch andere hoch wärmeleitende metallische Materialien wie z.B. eine Silberlegierung verwendet werden. Die Kappe 7 wird mittels eines Verbindungsstückes (Formteil) 8 aus thermisch schlecht leitendem Material (wärmebeständiger Kunststoff, z.B. PEEK oder PPS) an einem Rohrstück 4 (Trägerrohr) vorzugsweise aus Edelstahl befestigt. Das Rohr 4 kann dabei einen Außendurchmesser von bspw. 6mm aufweisen. Die Verbindung zwischen der Kappe 7 und dem Verbindungsteil (Formteil) 8 und zwischen dem Verbindungsteil (Formteil) 8 und dem Trägerrohr 4 kann durch Verpressen, Verkleben, Vergießen oder durch eine Kombination aus diesen Maßnahmen erfolgen. Das Messelement 10 hat somit direkten Kontakt mit der dünnwandigen hoch wärmeleitenden Kappe 7. Der Temperaturfühler 1 kann bspw. so in einem Thermometer verbaut sein, dass die Kappe 7 auf der Mantelfläche (Oberfläche) des zu messenden Rohres (Messrohr) 2 direkten Kontakt hat. Bei Temperaturänderungen erwärmt sich die Kappe 7 auf Grund seiner geringen Masse, seiner geringen Wandstärke und seiner hohen Wärmeleitfähigkeit, bspw. von ca. 320 W/mK, sehr schnell und gibt die Wärme auf Grund der thermischen Isolierung durch das Kunststoffverbindungsteil (Formteil) 8 sehr schnell und nahezu ausschließlich an das Messelement 10 weiter. Die Ansprechzeit ist am geringsten, wenn das Messelement 10 mittig auf dem Messrohr 2 aufsitzt. Um die Ansprechzeit zu optimieren, auch wenn das Messelement 10 etwas außermittig auf dem Messrohr 2 sitzt, kann zusätzlich eine hoch wärmeleitfähige Graphitfolie 6 auf die Kappe 7 aufgebracht werden. Die Graphitfolie 6 leitet die Wärme des Messrohres 2 vom Kontaktpunk schnell zur Mitte des Bodens der Kappe weiter, an dem das Messelement 10 sitzt. Der Temperaturfühler 1 ist dabei symmetrisch um seine Längsachse L aufgebaut. Zudem kann ein Schrumpfschlauch 9 vorgesehen, in dem die Anschlussleitungen 5 zur elektrischen Kontaktierung des Messelements 10 angeordnet sind.

In dem Behälter, der wie beschrieben ein Messrohr 4 sein kann, befindet sich ein Messstoff 3. Anstatt eine Rohres kann auch ein Tank als Behälter, dessen Oberflächentemperatur bestimmt werden soll, vorgesehen sein.

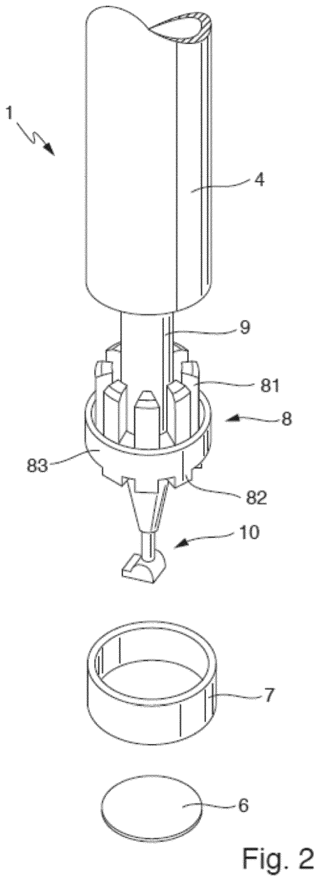

Figur 2 zeigt die die Ausführungsform gem. Figur 1 in einer Explosionsdarstellung. In dem Trägerrohr 4 sind die Anschlussleitungen 5 angeordnet und in dem Abschnitt in dem diese Anschlussleitungen mit Verbindungsleitungen des Messelements 10 verbunden sind ist ein Schrumpfschlauch 9 um die Anschlussleitungen 5 und/oder Verbindungsleitungen angebracht.

Das Formteil 8 weist einen ersten Abschnitt 81, einen zweiten Abschnitt 82 und einen dritten Abschnitt 83 auf. Der erste Abschnitt weist bspw. Rippen auf um einen Presssitz des Formteils in dem Trägerrohr zu erreichen. Der erste Abschnitt wird dazu bis zu einem Anschlag, bspw. in dem Trägerohr und/oder dem Formteil in das Trägerrohr geschoben.

Der zweite Abschnitt weist ebenfalls Rippen auf, die dazu dienen einen Presssitz mit dem Koppelelement, hier eine Kappe 7, zu erreichen. Dabei wird dieser erste Abschnitt dann bis zu einem Anschlag in der Kappe 7 und/oder dem Formteil 8 in die Kappe 7 geschoben.

Zwischen dem ersten und dem zweiten Abschnitt ist ein dritter Abschnitt angeordnet der als Abstandshalter zwischen dem Koppelelement, hier der Kappe 7, und dem Trägerrohr dient.

Die Kappe 7 weist bspw. wie in Figur 2 gezeigt eine zylindrische und Topfförmige Form auf. Die Kappe hat bspw. einen Boden B und eine Seitenwand W die von dem Boden, wie hier gezeigt parallel zur Längsachse L des Trägerrohres 4 verläuft.

Das Messelement 10 ist vorzugsweise in der Kappe 7 untergerbacht und kann bspw. an den Boden B der Kappe, auf der Innenseite der Kappe 7, gelötet sein.

## Patentansprüche

1. Temperaturfühler (1) zur Erfassung der Oberflächentemperatur umfassend:
einen Hohlkörper (4), eine Kappe (7), ein Formteil (8) und ein Messelement (10),
wobei die Kappe (7) an der Stirnseite des Temperaturfühlers (1) angeordnet ist und
den Hohlkörper (4) verschließt,
wobei das Messelement (10) innerhalb des Lumens der Kappe (7) angeordnet ist und thermisch mit der Kappe (7) gekoppelt ist,
wobei das Formteil (8) aus einem Material gefertigt ist, dessen Wärmeleitfähigkeit geringer ist als die Wärmeleitfähigkeit des Materials der Kappe (7) und des Hohlkörpers (4),
wobei das Formteil (8) wenigstens ein Verbindungmittel (81) aufweist, das mit wenigstens einem Verbindungsmittel an dem Hohlkörper (4) zusammenwirkt, um das Formteil (8) an dem Hohlkörper (4) zu befestigen,
wobei das Formteil (8) wenigstens ein weiteres Verbindungmittel (82) aufweist, um das Formteil (8) an der Kappe (7) zu befestigen,
wobei das Formteil (8) einen ringförmigen Abschnitt (83) aufweist, der im montierten Zustand des Temperaturfühlers (1) fluchtend zu den Außenflächen von Hohlkörper (4) und Kappe (7) angeordnet ist, und
wobei das Formteil (7) über einen Presssitz mit dem Hohlkörper (4) verbunden ist.

2. Temperaturfühler (1) nach Anspruch 1,
wobei die Kappe (7) dazu dient, thermisch mit der Umgebung des Temperaturfühlers (1) an der Stirnseite des Temperaturfühlers (1) zu koppeln.

3. Temperaturfühler (1) nach einem der vorherigen Ansprüche,
wobei das Formteil (7) aus einem elastischen Material, insbesondere einem hitzebeständigen, elastischen Material, vorzugsweise einem synthetischen Material, wie bspw. Kunststoff oder Silikon, besteht.

4. Temperaturfühler (1) nach einem der vorherigen Ansprüche,
wobei das Formteil (8) einen ersten Abschnitt (81) aufweist, welcher erste Abschnitt (81) in das Lumen des Hohlkörpers (4) ragt,
wobei das Formteil (8) einen zweiten Abschnitt (82) aufweist, welcher zweite Abschnitt (82) in das Lumen der Kappe (7) ragt und
wobei das Formteil (8) einen dritten Abschnitt (83) aufweist, der zwischen dem ersten und dem zweiten Abschnitt (81, 82) liegt,
welcher dritte Abschnitt (83) an die Oberfläche des Hohlkörpers (4) und/oder der Kappe (7) fluchtend anschließt.

5. Temperaturfühler (1) nach dem vorherigen Anspruch,
wobei der erste Abschnitt (81) Rippen aufweist, die entlang der Längsachse (L) des Hohlkörpers (4) verlaufen und
wobei der zweite Abschnitt (82) Rippen aufweist, die entlang der Längsachse des Hohlkörpers (4) verlaufen.

6. Temperaturfühler (1) nach einem der vorherigen Ansprüche,
wobei das Formteil (8) eine durchgehende Öffnung aufweist, durch die hindurch das Messelement (10) elektrisch, bspw. über Anschlussleitungen (5), verbunden ist.

7. Temperaturfühler (1) nach einem der vorherigen Ansprüche,
wobei in dem Hohlkörper (4) Anschlussleitungen (5) angeordnet sind, die zum elektrischen kontaktieren des Messelements (10) dienen.

8. Temperaturfühler (1) nach einem der vorherigen Ansprüche,
wobei der Temperaturfühler (1), vorzugsweise vermittels einer Vorspannkraft, mit seiner Stirnseite an eine Oberfläche eines Behälters (2), bspw. einer Rohrleitung, angelegt ist.

## Claims

1. Temperature sensor (1) designed to measure the surface temperature, wherein said sensor comprises:
a hollow body (4), a cap (7), a molded part (8) and a measuring element (10),
wherein the cap (7) is arranged on the front face of the temperature sensor (1) and closes the hollow body (4),
wherein the measuring element (10) is arranged inside the interior channel of the cap (7) and is thermally coupled to the cap (7),
wherein the molded part (8) is made from a material whose thermal conductivity is less than the thermal conductivity of the material of the cap (7) and of the hollow body (4),
wherein the molded part (8) has at least a means of connection (81), which interacts with at least a means of connection on the hollow body (4) in order to secure the molded part (8) on the hollow body (4),
wherein the molded part (8) has at least an additional means of connection (82) to secure the molded part (8) on the cap (7),
wherein the molded part (8) has an annular section (83) which, when the temperature sensor (1) is mounted, is arranged flush with the outer surfaces of the hollow body (4) and cap (7), and
wherein the molded part (7) is connected to the hollow body (4) by a press fit.

2. Temperature sensor (1) as claimed in Claim 1,
wherein the cap (7) is designed to be thermally coupled to the environment of the temperature sensor (1) on the front face of the temperature sensor (1).

3. Temperature sensor (1) as claimed in one of the previous claims,
wherein the molded part (7) is made from an elastic material, particularly a heat-resistant elastic material, preferably made from a synthetic material, such as plastic or silicone.

4. Temperature sensor (1) as claimed in one of the previous claims,
wherein the molded part (8) has a first section (81), wherein said first section (81) extends into the interior channel of the hollow body (4),
wherein the molded part (8) has a second section (82), wherein said second section (82) projects into the interior channel of the cap (7), and
wherein the molded part (8) has a third section (83), wherein said third section (83) is located between the first and the second section (81, 82), wherein said third section (83) is flush with the surface of the hollow body (4) and/or the cap (7).

5. Temperature sensor (1) as claimed in the previous claim,
wherein the first section (81) has ribs which extend along the longitudinal axis (L) of the hollow body (4) and
wherein the second section (82) has ribs which extend along the longitudinal axis of the hollow body (4).

6. Temperature sensor (1) as claimed in one of the previous claims,
wherein the molded part (8) has a through-opening through which the measuring element (10) is connected electrically, e.g. via connection cables (5).

7. Temperature sensor (1) as claimed in one of the previous claims,
wherein connection cables (5) are arranged in the hollow body (4) and serve to establish the electrical connection with the measuring element (10)

8. Temperature sensor (1) as claimed in one of the previous claims,
wherein the temperature sensor (1) is applied, via its front face, to a surface of a vessel (2), for example a pipe, preferably by means of a pretension force.

## Revendications

1. Capteur de température (1) destiné à la mesure de la température de surface, lequel capteur comprend :
un corps creux (4), un capuchon (7), une pièce moulée (8) et un élément de mesure (10), le capuchon (7) étant disposé sur la face frontale du capteur de température (1) et fermant le corps creux (4),
l'élément de mesure (10) étant disposé à l'intérieur du canal intérieur du capuchon (7) et étant couplé thermiquement avec le capuchon (7),
la pièce moulée (8) étant fabriquée dans un matériau dont la conductivité thermique est inférieure à la conductivité thermique du matériau du capuchon (7) et du corps creux (4),
la pièce moulée (8) présentant au moins un moyen de liaison (81), qui interagit avec au moins un moyen de liaison sur le corps creux (4) pour fixer la pièce moulée (8) sur le corps creux (4),
la pièce moulée (8) présentant au moins un autre moyen de liaison (82) pour fixer la pièce moulée (8) sur le capuchon (7),
la pièce moulée (8) présentant une section annulaire (83) qui, à l'état monté du capteur de température (1), est disposée en alignement avec les surfaces extérieures du corps creux (4) et du capuchon (7), et
la pièce moulée (7) étant reliée au corps creux (4) par un ajustement serré.

2. Capteur de température (1) selon la revendication 1,
pour lequel le capuchon (7) est destiné à être couplé thermiquement à l'environnement du capteur de température (1) sur la face frontale du capteur de température (1).

3. Capteur de température (1) selon l'une des revendications précédentes,
pour lequel la pièce moulée (7) est constituée d'un matériau élastique, notamment d'un matériau élastique résistant à la chaleur, de préférence d'un matériau synthétique, tel que du plastique ou du silicone.

4. Capteur de température (1) selon l'une des revendications précédentes,
pour lequel la pièce moulée (8) présente une première section (81), laquelle première section (81) s'étend dans le canal intérieur du corps creux (4),
pour lequel la pièce moulée (8) présente une deuxième section (82), laquelle deuxième section (82) fait saillie dans le canal intérieur du capuchon (7) et pour lequel la pièce moulée (8) présente une troisième section (83), laquelle troisième section (83) se situe entre la première et la deuxième section (81, 82), laquelle troisième section (83) se raccorde à la surface du corps creux (4) et/ou du capuchon (7) de manière affleurante.

5. Capteur de température (1) selon la revendication précédente,
pour lequel la première section (81) présente des nervures qui s'étendent le long de l'axe longitudinal (L) du corps creux (4) et
pour lequel la deuxième section (82) présente des nervures qui s'étendent le long de l'axe longitudinal du corps creux (4).

6. Capteur de température (1) selon l'une des revendications précédentes,
pour lequel la pièce moulée (8) présente une ouverture traversante à travers laquelle l'élément de mesure (10) est relié électriquement, par exemple par le biais de fils de raccordement (5).

7. Capteur de température (1) selon l'une des revendications précédentes,
pour lequel des fils de raccordement (5) sont disposés dans le corps creux (4) et servent à établir le contact électrique avec l'élément de mesure (10)

8. Capteur de température (1) selon l'une des revendications précédentes,
le capteur de température (1) étant appliqué par sa face frontale, de préférence au moyen d'une force de précontrainte, contre une surface d'un réservoir (2), par exemple d'une conduite.
